(19) Europäisches Patentamt
European Patent Office
Office européen des brevets

(11) **EP 4 613 710 A1**

(12) **EUROPEAN PATENT APPLICATION**

(43) Date of publication:
**10.09.2025   Bulletin 2025/37**

(21) Application number: **24161178.9**

(22) Date of filing: **04.03.2024**

(51) International Patent Classification (IPC):
**C01D 5/00** (2006.01)          **C01D 5/08** (2006.01)
**C02F 1/58** (2023.01)          **C05D 1/02** (2006.01)
**H01M 10/54** (2006.01)

(52) Cooperative Patent Classification (CPC):
**C01D 5/00; C01D 5/08; C02F 1/5236; C02F 1/66;
C05D 1/02; C05F 7/005; C05F 7/02;**
C02F 2101/101; C02F 2103/34; C02F 2209/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Umicore Battery Materials Finland Oy**
**67900 Kokkola (FI)**

(72) Inventors:
- **TUIKKA, Matti**
  **67900 Kokkola (FI)**
- **ERIKSSON, Mårten**
  **67900 Kokkola (FI)**
- **MARJELUND, Janne**
  **67900 Kokkola (FI)**

(74) Representative: **Umicore RDI Patent Department**
**Watertorenstraat 33**
**2250 Olen (BE)**

(54) **METHOD FOR TREATING A SOLUTION CONTAINING SODIUM SULFATE**

(57)   A method for treating a first solution containing sodium sulfate obtainable from an industrial process, the method comprising: providing the first solution, preferably the first solution is alkaline; providing potassium hydroxide, preferably in solid form and/or as a second solution containing potassium hydroxide of 25 wt.% or more, such as in the range 25-75 wt.%; mixing at least the potassium hydroxide with the first solution to obtain a reaction mixture, whereby obtaining a first solid fraction comprising precipitated sulfate and a first liquid fraction comprising sodium hydroxide; and recovering the first solid fraction and the first liquid fraction; wherein the method further comprises providing a source of ammonia $(NH_3)$ to obtain a concentration of $NH_3(aq)$ in the reaction mixture of at least 10 g/l.

**Description**

**TECHNICAL FIELD**

Generally, the present invention relates to a method for treating a solution containing sodium sulfate. The method is especially suitable for treating a solution containing sodium sulfate obtained from an industrial process.

**BACKGROUND**

Several industrial activities, such as metal refining industry and pulping industry, produce metal sulfates. For example, Kraft pulping wastewaters contain sodium sulfates because of the use of NaOH and $Na_2S$ as cooking chemicals. Another emerging and quickly increasing industrial area is the production of precursors for cathode active material for lithium-ion batteries The precursors are typically prepared by coprecipitation from sulfate-based metal solutions and alkaline, such as sodium hydroxide (NaOH). After precipitation, a mother liquor left as a waste solution contains high levels of sodium sulfate.

In general, sulfate emissions into water tend to elevate water salinity levels and can exacerbate eutrophication. Soluble sulfate salts, such as sodium sulfate ($Na_2SO_4$), contribute to the heightened level of salinity in water. In some industries, wastewater contains soluble sulfate salts. The increased salinity of wastewater evacuating from such an industrial process into water, e.g. a river or a lake, results in greater density compared to the surrounding lake water. As a consequence of these varying densities, water readily stratifies into two distinct layers: a saline bottom layer and a less saline upper layer. This phenomenon is known as stratification, which impedes the natural mixing of water between the bottom and surface layers.

Therefore, in many countries, sulfate concentrations in industrial wastewater are subject to stringent regulations. For instance, in Finland, the allowable levels of sulfate in wastewater and the necessary treatment procedures are established through a company's environmental permit. Typically, the standard limit for sulfate concentrations in sewage water is set at 400 mg/l. These sulfate restrictions aim to mitigate the environmental impact stemming from elevated salinity levels in natural waters, particularly in freshwater environments. The World Health Organization (WHO) recommends a maximum sulfate content of 250 mg/l in drinking water.

Many different approaches have been proposed to limit the discharge of sodium sulfate into the environment. Due to ambitious sustainability goals and rising raw material costs, instead of discharging or landfilling of it, circular ways of processing sodium sulfate are searched. Existing approaches include converting sodium sulfate to potassium sulfate or Glauber salt, or it has been landfilled, which are not practical solutions to solve the issues with emerging waste sodium sulfate.

There is a need to avoid production of sulfate-based waste and salination while increasing industrial production. This requires more efficient methods for wastewater and process water treatment, both for sulfate removal and for the re-use of sulfate-containing wastewaters and process waters.

**SUMMARY OF THE INVENTION**

A process was found out for the utilization of waste sodium sulfate from industrial sources, and to convert it back to usable chemicals. Especially it is found that it is possible to enhancing the removal of sulfate from an industrial waste solution containing sodium sulfate by using potassium hydroxide and a source of ammonia in the conversion process to form precipitated sulfate. Thanks to the method according to the invention, solubility of the sulfate is lowered which enables better crystallization/precipitation of the sulfate. The precipitated sulfate can be conveniently removed, and as a result, the removal of sulfate from the industrial waste solution is enhanced.

As a first aspect, the present invention provides a method for treating a first solution containing sodium sulfate obtainable from an industrial process, the method comprising:

- providing the first solution, preferably the first solution is alkaline;
- providing potassium hydroxide, preferably in solid form and/or as a second solution containing potassium hydroxide of 25 wt.% or more, such as in the range 25-75 wt.%;
- mixing at least the potassium hydroxide with the first solution to obtain a reaction mixture, whereby obtaining a first solid fraction comprising precipitated sulfate and a first liquid fraction comprising sodium hydroxide; and
- recovering the first solid fraction and the first liquid fraction,

wherein the method further comprises providing a source of ammonia ($NH_3$) to obtain a concentration of $NH_{3(aq)}$ in the reaction mixture of at least 10 g/l.

According to the method, while mixing at least the potassium hydroxide with the first solution, precipitation of sulfate spontaneously occurs in the reaction solution. In other words, the mixing step inherently contains simultaneously allowing the sulfate in the reaction mixture to precipitate. The concept of precipitate and means to allow precipitation are well known in the art.

The conversion of sodium sulfate into precipitated sulfate may, depending on the concentration of ammonia and/or the stoichiometric ratio between the potassium hydroxide and sodium sulfate, follow one or more of the general chemical reactions below:

$$Na_2SO_4 + 2\ KOH \rightleftharpoons K_2SO_4 + 2\ NaOH\ (Equation\ 1);$$

or

$$2\ Na_2SO_4 + 3\ KOH \rightleftharpoons K_3Na(SO_4)_2 + 3\ NaOH\ (Equation\ 2a).$$

Thus, the precipitated sulfate may be potassium sulfate ($K_2SO_4$) or potassium sodium sulphate ($K_3Na(SO_4)_2$), also known as glaserite (double salt of potassium and sodium sulphate), or a mixture thereof. Thus, according to the present method, the obtained first solid fraction comprises precipitated sulfate, i.e. potassium-based sulfate, and the obtained first liquid fraction comprises sodium hydroxide.

It is found that, by maintaining a concentration of $NH_{3(aq)}$ in the reaction mixture of at least 10 g/l, the first solid fraction contains more sulfur, and the first liquid fraction contains less sulfur, as compared to the method wherein the concentration of $NH_{3(aq)}$ in the reaction mixture is below 10 g/l.

The present method provides a low-temperature process, enabling cost-efficient implementing and processing, and efficient sulfate removal. The method enables the utilization of obtained product, the first liquid fraction containing NaOH, and optionally the first solid fraction which may contain $K_2SO_4$. The first liquid fraction containing NaOH can be used as cooking chemical or precipitant, and the first solid fraction containing $K_2SO_4$, can be used as fertilizer.

The glaserite obtained from the Equation 2a may be further converted:

$$K_3Na(SO_4)_2 + KOH \rightleftharpoons 2\ K_2SO_4 + NaOH\ (Equation\ 2b)$$

Thus, the obtained first solid fraction containing $K_3Na(SO_4)_2$ may also be finally used as fertilizer after further conversion.

The main embodiments are characterized in the independent claims. Various embodiments are disclosed in the dependent claims. The embodiments and examples disclosed herein are mutually freely combinable unless otherwise explicitly stated.

## DETAILED DESCRIPTION OF THE INVENTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

In this specification, percentage values, unless specifically indicated otherwise, are based on weight (w/w, by weight, or wt% or wt.%). If any numerical ranges are provided, the ranges include also the upper and lower values.

It should be understood, that in this specification, the term "at least" encompasses the concept of "equal to and/or more than", and the term "at most" encompasses the concept of "equal to and/or less than".

As a first aspect, the present invention provides a method for treating a first solution containing sodium sulfate obtainable from an industrial process, the method comprising:

- providing the first solution, preferably the first solution is alkaline;
- providing potassium hydroxide, preferably in solid form and/or as a second solution containing potassium hydroxide of 25 wt.% or more, such as in the range 25-75 wt.%;

- mixing at least the potassium hydroxide with the first solution to obtain a reaction mixture, whereby obtaining a first solid fraction comprising precipitated sulfate and a first liquid fraction comprising sodium hydroxide; and
- recovering the first solid fraction and the first liquid fraction,

wherein the method further comprises providing a source of ammonia ($NH_3$) to the reaction mixture to obtain a concentration of $NH_{3(aq)}$ in the reaction mixture of at least 10 g/l.

According to the method, while mixing at least the potassium hydroxide with the first solution, precipitation of sulfate spontaneously occurs in the reaction solution. In other words, the mixing step inherently contains simultaneously allowing the sulfate in the reaction mixture to precipitate. The concept of precipitate and means to allow precipitation are well known in the art.

The industrial process may be a process of battery industry, preferably a hydroxide co-precipitation process of sulfate salt of material comprising at least one of Ni, Mn, and Co.

The first solution contains sodium sulfate. The first solution may contain wastewater from an industrial process, said wastewater containing sodium sulfate. The first solution may be wastewater from an industrial process. The industrial process may be any applicable industrial process, which provides sodium sulfate ($Na_2SO_4$) in a suitable form, which may be an effluent, wastewater, waste solution or the like, of an industrial process.

The first solution may be alkaline. The first solution may be or may comprise a sodium sulfate solution being formed as a by-product in pulping industry or battery material industry, where alkali, e.g. NaOH, is used in the industrial process and renders the first solution alkaline. By being alkaline it is meant the pH of the solution is at an alkaline range, such as pH of 8 or more, 9 or more, 10 or more, 11 or more, or 12 or more.

The first solution may also be not alkaline. In such a case, the first solution may be made alkaline before the mixing step; or the reaction mixture may be made alkaline before undergoing precipitation. In some embodiments, the method comprises increasing alkalinity of the reaction mixture, such as by providing sodium hydroxide, preferably in excess molar amounts to the sodium sulfate. Thus, the method according to the present invention is also suitable for treating a first solution containing sodium sulfate obtained from an industrial process, wherein the first is not alkaline.

According to the invention, the method further comprises providing a source of ammonia ($NH_3$) to obtain a concentration of $NH_{3(aq)}$ in the reaction mixture of at least 10 g/l, preferably wherein a stoichiometric amount of potassium hydroxide is used. Preferably, the $NH_{3(aq)}$ concentration in the reaction mixture is at least 15 g/l, for example at least 16, 17, 18, 19, 20, 21, 22, 23, 24, or 25 g/l; preferably at least 35 g/l, for example at least 40, 45, 50, or 55 g/l; more preferably at least 60 g/l, for example at least 65, 70, 75, or 80 g/l; and even more preferably at least 90 g/l, for example at least 95, 100, 110, 120, 130, 140, or 150 g/l. Herein a source of ammonia refers to any forms of ammonia and its derivatives. Examples of source of ammonia include, but are not limited to, ammonia gas, ammonia solution and ammonia salt, such as ammonium sulfate. The source of ammonia may be thus an ammonium ion-containing solution. The ammonium ion-containing solution may include, but not be limited to, $NH_4OH$, $(NH_4)_2SO_4$, $NH_4NO_3$, $NH_4Cl$, $CH_3COONH_4$, $NH_4CO_3$, or a combination thereof. For example, the ammonium ion-containing solution may be an ammonia aqueous solution, also known as ammonia water, ammonium hydroxide, ammoniacal liquor, ammonia liquor, aqua ammonia, or aqueous ammonia, i.e. a solution of ammonia in water. It can be denoted by the symbols $NH_{3(aq)}$. In some embodiments, the source of ammonia is ammonia water, preferably the ammonia water has a concentration of 170 g/l or more, such as in the range of 170-550 g/l, or a concentration of 300 g/l or more, such as in the range of 300-550 g/l, or a concentration of 400 g/l or more, such as in the range of 400-550 g/l. The higher the concentration, the lesser is the amount of added water needed, which is beneficial in industrial water management system. The $NH_{3(aq)}$ concentration may be measured by using a commercially available titrator, for example Metrhom 848 Titrino Plus.

It is surprising found that the addition of a source of ammonia in the disclosed ranges contributes a higher yield of the first solid fraction comprising precipitated sulfate, compared to a reaction with otherwise the same conditions but ammonia. It is believed that, without intending to be bound to any scientific theories, that the added ammonia not only facilitates the reaction rate towards to the precipitated sulfate (potassium-based sulfate) forming in the chemical equilibrium reactions, but also decreases the solubility of potassium-based sulfate in the reaction solution. Thus, the first liquid fraction contains less sulfate residuals, which are considered as impurities. Sulfate residuals in the first liquid fraction are difficult to be separated from the first liquid fraction, and a high level of sulfate residuals may render the first liquid traction not suitable for being used directly as cooking chemical for pulping industry or as precipitant in precipitating precursors of cathode active material in battery industry. Therefore, the adding a source of ammonia in the disclosed ranges also contributes a purer level of the first liquid fraction comprising sodium hydroxide. Furthermore, it has been surprisingly found, that by adding a source of ammonia in the disclosed ranges, when a stoichiometric or superstoichiometric amount of potassium hydroxide is used, the conversion rate of sodium sulfate into precipitated (potassium-based) sulfate increases, compared to a reaction with otherwise the same conditions but ammonia. Also, when the concentration of ammonia is high enough, for example at least 90 g/l, or at least 110 g/l, or at least 130 g/l, even when a substoichiometric amount of potassium hydroxide is used, a very high conversion rate can be achieved. In other words, to achieve a satisfactory conversion rate, it is possible to use less potassium hydroxide, and thus cost-efficiency can be achieved.

In some embodiments, the potassium-based sulfate crystallizes in the method as a main phase of the obtained first solid fraction and can be separated from the sodium hydroxide, which remains solubilized in the first liquid fraction. The first solid fraction and the first liquid fraction can be separated and recovered by using any suitable methods and devices for separating and recovering solids and liquids, for example by filtering. In some embodiments, the recovering the first solid fraction comprises filtering the second precipitated material to obtain a composition containing potassium sulfate.

The filtering process and equipment are generally known in the field. An example is provided below. Slurries are filtrated in a dewatering process to separate the solid particles from the liquid. The dewatering process may be realized by a belt filter having a moving endless filter cloth having a feed end onto which the slurry is distributed. The liquid of the slurry filtrates through the filter cloth permeable to the liquid, whereby a filter cake containing solid particles of the slurry is formed onto the filter cloth. The filter cake can then be washed in a washing phase by passing washing liquid through the filter cake, while the cake is resting on the moving filter cloth. The filtration of the liquids through the filter cloth is often enhanced by creating a partial vacuum on another side of the filter cloth than onto which the filter cake is formed. At the discharge end of the belt filter the filter cake is removed from the filter cloth and possibly conveyed to further processing phases outside the belt filter such as to an additional drying phase.

Accordingly, in some embodiments of the present invention, the filtering the first solid fraction comprising passing washing liquid, said washing liquid may comprise ammonia water, through a filter cake comprising the first solid fraction obtained in the filtering of the solid fraction.

The first solid fraction may be treated to further improve the purity and/or to further convert the crystallized sulfates comprising such as $NaK_3(SO_4)_2$ to $K_2SO_4$. In some embodiments, the method further comprises treating the recovered first solid fraction by:

- mixing the recovered first solid fraction with potassium hydroxide, preferably in solid form or as a solution containing potassium hydroxide of 25 wt.% or more, such as in the range 25-75 wt.%, and optionally with water in cases when the obtained second reaction mixture does not contain water or does not contain water in a sufficient amount, to obtain a second reaction mixture wherein precipitation occurs, whereby a second solid fraction comprising potassium sulfate and a second liquid fraction comprising sodium hydroxide are obtained; and
- recovering the second solid fraction and the second liquid fraction.

The second solid fraction may be recovered in the same way as described above about recovering the first solid fraction. The first liquid fraction and/or second liquid fraction may be used as a precipitant in a co-precipitation process, for example a process of battery industry, preferably a hydroxide co-precipitation process of sulfate salt material comprising at least one of Ni, Mn, and Co. The present method may be a waste-free method comprising utilizing all the reaction products.

The obtained first or second solid fraction containing potassium sulfate is recovered and it may be provided for example as a fertilizer product or for preparation of a fertilizer product, which may be carried out in the same process or in a separate process. Other products comprising or based on potassium sulfate may be prepared as well. The obtained first or second solid fraction containing potassium sulfate may be transported to another location for further processing, such as for preparing the further product, for example to a fertilizer manufacturer to prepare a fertilizer product. In some advantageous embodiments, the method comprises the recovering the first and/or second solid fraction by means of filtration, to obtain a composition containing potassium sulfate, said composition is suitable to be used as a fertilizer composition, which preferably comprising potassium of at least 40 wt.% and sulfur of at least 17 wt.%.

The obtained first or second liquid fraction containing sodium hydroxide is recovered, and it can be reused as industrial chemical, for example in the same industrial process where the first solution containing sodium sulfate is obtained, or a process relating to the same industrial process. The industrial process is an industrial process utilizing sodium hydroxide, for example using sodium hydroxide as a process chemical and/or for other purposes in the process or in a related process. The industrial process may be carried out at the same facilities or plant, such as a factory, a mill, or any other applicable processing site. However, it is possible to provide the sodium hydroxide to another use and/or industrial process, preferably wherein such a use and/or process is located near the site of carrying out the method. Transporting or conveying the obtained sodium hydroxide can be arranged in most industrial plants or other facilities, for example by providing piping or other conveying means, or by arranging transport in containers, for example by using a dedicated conveyer or other transport means, such as vehicle(s), and/or transporting chain. In one embodiment the method according to the present invention comprises using the recovered sodium hydroxide in the industrial process and/or in a process relating to the industrial process.

Therefore, closed or substantially closed process can be provided. This enables providing industrial processes, which provide less or no waste. As sodium sulfate has been considered as a problematic waste in respect of further usage, and the material has been mainly discarded, the present method enables utilizing the waste and obtaining valuable raw material for the processes. As all the waste sodium sulfate can be utilized, there is no need to find disposal site for the waste, or to apply for any authorization to dispose waste. This enables implementing industrial processes and plants with less environmental issues, less authorizations, less wastewater purification units or plants, and to a variety of locations.

The separated and recovered fractions may be analyzed for purity with any suitable means. For example, the purity of the potassium-based sulfate may be analyzed from a sample by using X-ray Powder Diffraction (XRD) and related instrumentation, such as an X-ray powder diffractometer or versatile XRD systems for R&D, to obtain XRD spectra or pattern. This obtained data can be used for evaluating the purity of the potassium sulfate and/or obtaining a mass fraction of the sulfates in the sample to evaluate the conversion degree in the method, success of the method and the like. The proceeding of the reaction, such as the conversion degree during the reaction, may be also monitored and/or estimated by using other means, such as monitoring absorbance and/or turbidity of the reaction mixture, detecting formed precipitate and the like.

The concentration of sodium sulfate in the first solution may be concentrated enough, so for example waste waters containing minor amounts of sodium sulfate are excluded, such as sodium sulfate below 50 g/l, below 30 g/l or below 10 g/l. In some embodiments, a concentration of sodium sulfate in the first solution is 50 g/l or more, such as in the range of 50-300 g/l, or 100 g/l or more, such as in the range of 100-300 g/l. In some embodiments, a concentration of sulfur in the first solution is 10.00 g/l or more, such as in the range of 10.00-30.00 g/l, or 15.00 g/l or more, such as in the range of 15.00-50.00 g/l, as determined by ICP; and/or wherein a concentration of sodium in the first solution is 25.00 g/l or more, such as in the range of 20.00-80.00 g/l, or 30.00 g/l or more, such as in the range of 30.00-90.00 g/l, as determined by ICP. It can be directly obtained from the corresponding industrial process generating the first solution containing sodium sulfate, so the first solution may have not been treated, such as purified, before providing to the present method. However, the first solution containing sodium sulfate solution may have been concentrated and/or it is concentrated in the present method. The method may comprise determining and/or obtaining the concentration of the sodium sulfate in the first solution. This can be used to determine the required amount of potassium hydroxide, the suitability of the first solution for the present method, the need for concentrating the first solution, and/or the need to adjust any other process parameters, and a corresponding decision whether or not to carry out said action, and/or in which extent, can be made based on the determined and/or obtained concentration. The method may comprise providing, such as conveying and/or transporting, waste sodium sulfate from the industrial process, or a process step generating sodium sulfate waste, for example to the container. The first solution may contain small amounts of impurities, but it was found out in the tests that the impurities did not interfere the process and they could be even separated from the sodium sulfate, if necessary.

The present method comprises a step of providing potassium hydroxide. The potassium hydroxide may be provided as solid form or as a solution, such as an aqueous solution. The solution may be concentrated solution, such as having a concentration of KOH of 25% by weight or more, such as 30% by weight or more, for example in the range of 30-50% by weight, for example about 30% by weight. Preferably potassium hydroxide is provided in solid form, such as in the form of pellets, granules, or powder. Solid potassium hydroxide generates heat when solubilized in the aqueous solution, which facilitates the process. Also providing KOH in solid or concentrated form enables implementing the method in a simple, safe, and compact form. This has advantages in water and solutions management, and implementation of devices and systems, which can be more compact as no large volumes of KOH are needed.

According to the present method, the first solution, the potassium hydroxide and the source of ammonia are provided and mixed in any order to obtain the reaction mixture. This can be carried out in a reactor, which may be equipped with one or more mixing means, such as one or more mixers, which may comprise one or more mixing blades, agitators, effect of flow and/or the like, and also the effect of flow of liquids may be utilized for obtaining mixing. A reaction mixture is obtained. For example, the reaction mixture may be obtained by:

- mixing the first solution and the potassium hydroxide before admixing the source of ammonia;
- mixing the first solution and the source of ammonia before admixing the potassium hydroxide;
- mixing the potassium hydroxide and the source of ammonia before admixing the first solution; or
- admixing the potassium hydroxide, the source of ammonia, and the first solution simultaneously.

In some embodiments, it is advantageously to mix the first solution and the source of ammonia before admixing the potassium hydroxide. In general, especially adding solid potassium hydroxide increases the mixture temperature, and the solubility of ammonia in the mixture decreases with the increase of temperature. This addition order thus requires less source of ammonia compared to other addition orders.

Preferably, the temperature of the first solution is adjusted to around 30 °C before or during the providing the source of ammonia to increase the solubility of ammonia.

In some embodiments, the temperature of the reaction mixture is adjusted to at around 50 °C or less, such as 2-50 °C or 2-30 °C, to optimize the obtaining the first solid fraction comprising potassium-based sulfate, i.e. precipitated sulfate, and a liquid fraction comprising sodium hydroxide. The temperature-adjusting and/or mixing may be carried out for a time period required to allow reacting all or substantially all of the reagents, such as to allow full or substantially full conversion of sodium sulfate to potassium-based sulfate, for example 90% or more, or 95% or more.

After the reaction, the solution is cooled or allowed to cool, such as to 50°C or less, for example to 40°C or less, preferably to room temperature, such as to 25 °C or less, for example 15-22°C, to obtain crystallized potassium-based sulfate and a solution of sodium hydroxide. During the cooling, potassium-based sulfate is crystallized with high purity (> 90%) and formed NaOH remains in the solution. The crystallized potassium-based sulfate can be separated from the remaining NaOH solution.

**Examples**

The present invention is further illustrated with reference to some examples and comparative examples.

Measurement methods used in the examples

$NH_{3(aq)}$ concentration analysis

The $NH_{3(aq)}$ concentration was measured from a sample by end point titration using an instrument of Metrohm 848 Titrino Plus. 1 ml of a solution containing the $NH_3$ content to be measured was added to a titration vessel, followed by adding of 30-40 ml of deionized water and 1 ml of 1M NaOH. The obtained sample was the titrated to the end point by 0.1M HCl.

X-ray diffraction analysis

The XRD spectra of the samples were measured with an X-ray diffractometer EMPYREAN® by a manufacturer of PANalytical with the conditions as described in Table 1 below.

Table 1 XRD measurement conditions

| Anode material | Co |
|---|---|
| K-Alpha 1 wavelength | 1.78901 Å |
| Generator voltage | 40 kV |
| Tube current | 45 mA |
| Scan Range | 10-90 ° |
| Scan Step Size | 0.0130 ° |
| Scan step time | 178.24 s |
| Divergence slit | 0.355 ° |
| detector opening | 3.3482 ° |
| primary soller slit | 0.04 |

Elemental composition analysis

The contents of K, Na and S in the obtained solid fraction and liquid fraction samples were measured by the Inductively Coupled Plasma - Optical Emission Spectrometry (ICP-OES) method using an Thermo iCAP 6000 Series ICP-OES instrument.

The measurement sample was prepared as follows for solid samples: 0.25 gram of a powder sample of each example was dissolved into deionized (DI) water in a 100 ml volumetric flask. The volumetric flask was filled with deionized (DI) water up to the 100 ml mark, followed by complete homogenization. 1 ml of the solution was taken out by a pipette and transferred into a 100 ml volumetric flask for the second dilution. An appropriate amount of a concentrated nitric acid was added by a pipette to achieve 5% $HNO_3$ solution when brought to volume with deionized water (DI) and then homogenized. Finally, this solution was used for the ICP-OES measurement. The contents of K, Na and S are expressed as %.

The measurement sample was prepared as follows for liquid samples: 1 ml of liquid sample was taken out by a pipette and transferred into a 100 ml volumetric flask. The volumetric flask was filled with deionized (DI) water up to the 100 ml mark, followed by complete homogenization. An appropriate amount of the solution was taken out by a pipette and transferred into a 100 ml or 250 ml volumetric flask for the second dilution. An appropriate amount of a concentrated nitric acid was added by a pipette to achieve 5% $HNO_3$ solution when brought to volume with deionized water (DI) and then homogenized. Finally, the solution was used for the ICP-OES measurement. The contents of Co, Mn, Co, K, Na, and S are expressed as g/l.

Example 1

First, 1 M sodium sulfate solution was prepared by dissolving solid sodium sulfate ($Na_2SO_4$) into deionized water. Then, four different examples, Examples 1.1-1.4, were conducted, wherein each example 1.1-1.4, the amount of 25 wt.% ammonia water as described in Table 2 was mixed with 200 ml of the prepared sodium sulfate solution in an Erlenmeyer flask. Then, 22.44 g of potassium hydroxide (KOH) pellets was added to the flask while continuously stirring by a magnetic stirrer to form a fully homogenous solution. After all potassium hydroxide was added, the temperature of the solution was recorded, and the mixing was then ended and the solution was allowed to cool down to 30 °C, followed by Büchner funnel filtering to separate the obtained solid and liquid fractions.

The analysis of the obtained solid and liquid fractions, including X-ray diffraction (XRD) for the solid fraction and Inductively Coupled Plasma (ICP) of the elemental composition analysis for the solid and liquid fractions, were conducted as described above and the results are given in Table 3. Table 3 reports also the amount (in grams) of the obtained solid fraction and the conversion percentage of sulfate from the sodium sulfate solution to the obtained solid fraction, calculated by using the sulfur content in the sodium sulfate solution and the measured ICP results for the sulfur contents in the filtrate.

Comparative example 1

Comparative example 1 was conducted and analyzed in the same way as Examples 1.1-1.4 except that ammonia water was not used, the results are given in Table 3.

Table 2. The molar ratio of KOH:$Na_2SO_4$, amount of added KOH, temperatures before and after the KOH addition, amount of added ammonia water, and $NH_3$ concentration of the reaction mixtures of Example 1 and Comparative example 1

| Example | Molar ratio of KOH:$Na_2SO_4$ | Amount of added KOH (g) | Temperature before KOH (°C) | Temperature after KOH (°C) | Amount of added ammonia water (ml) | $NH_3$ (g/l) |
|---------|------------------------------|-------------------------|-----------------------------|----------------------------|-----------------------------------|--------------|
| Ex 1.1 | 2:1 | 22.44 | 21.9 | 35.3 | 10 | 10.8 |
| Ex 1.2 | 2:1 | 22.44 | 22.0 | 35.1 | 20 | 20.5 |
| Ex 1.3 | 2:1 | 22.44 | 21.7 | 33.7 | 40 | 37.6 |
| Ex 1.4 | 2:1 | 22.44 | 21.3 | 32.1 | 80 | 64.5 |
| CEx 1.1 | 2:1 | 22.44 | 20.1 | 33.4 | 0 | 0 |

Table 3. The analysis results of the obtained solid and liquid fractions of Example 1 and Comparative example 1

| Example | Obtained solid (g) | Conversion of $SO_4$ (%) * | XRD analysis | Mass fraction Y of $NaK_3(SO_4)_2$: $K_2SO_4$ | ICP analysis (filtrate) | | | ICP analysis (solid) | | |
|---|---|---|---|---|---|---|---|---|---|---|
| | | | Main phase | | K (g/l) | Na (g/l) | S (g/l) | K (wt.%) | Na (wt.%) | S (wt.%) |
| Ex 1.1 | 12.27 | 46.5 | $NaK_3(SO_4)_2$ | 100:0 | 37.06 | 34.45 | 16.33 | 36.5 | 8.32 | 19.13 |
| Ex 1.2 | 14.30 | 51.1 | $NaK_3(SO_4)_2$ | 100:0 | 34.62 | 33.03 | 14.24 | 36.51 | 8.45 | 19.00 |
| Ex 1.3 | 17.98 | 57.1 | $NaK_3(SO_4)_2$ | 100:0 | 29.64 | 30.37 | 11.47 | 36.38 | 8.53 | 19.02 |
| Ex 1.4 | 21.28 | 66.8 | $NaK_3(SO_4)_2$ | 100:0 | 20.59 | 24.89 | 7.61 | 36.62 | 8.60 | 19.23 |
| CEx 1.1 | 10.66 | 37.1 | $NaK_3(SO_4)_2$ | 100:0 | 47.08 | 39.76 | 20.65 | 36.41 | 8.43 | 19.06 |

Y A mass fraction calculated based on the Rietveld refinement analysis.

In view of Example 1 and Comparative example 1, the more the concentration of $NH_3$ in the reaction mixture, the lower the sulfur content remaining in the filtrate, which indicates a higher conversion of sulfates, i.e. the conversion of the sulfate from the sulfate solution into the solid fraction, precipitated sulfate. Further, according to the conducted XRD and ICP analysis, the added ammonia does not influence to the composition of the obtained solid fraction.

Example 2

First, 1 M sodium sulfate solution was prepared by dissolving solid sodium sulfate ($Na_2SO_4$) into deionized water. Then four separate examples, Examples 2.1-2.4, were conducted wherein each example, first, 200 ml of the prepared sodium sulfate solution was added into an Erlenmeyer flask and mixed with 200 ml of 25 wt.% ammonia water while continuously stirring by a magnetic stirrer in an Erlenmeyer flask. Then, the amount of potassium hydroxide (KOH) pellets as described in Table 4 below was added into the Erlenmeyer flask in small batches and continuously stirring by a magnetic stirrer to form a fully homogenous solution. The mixing was then ended, and the solution was allowed to cool down to 30 °C, followed by Büchner funnel filtering to separate the obtained solid and liquid fractions.

The analysis of the obtained solid and liquid fractions, including X-ray diffraction (XRD) for the solid fraction and Inductively Coupled Plasma (ICP) of the elemental composition analysis for the solid and liquid fractions, were conducted as described above and the results are given in Table 5. Table 5 reports also the amount (in grams) of the obtained solid fraction and the conversion percentage of SO4 from the sodium sulfate solution to the obtained solid fraction, calculated by using the sulfur content in the sodium sulfate solution and the measured ICP results for the sulfur contents in the filtrate.

Comparative example 2

Comparative example 2 was conducted and analyzed in the same way as Examples 2.1-2.3 except that ammonia water was not used, the results are given in Table 5.

Table 4. The molar ratio of KOH:Na₂(SO₄), amount of added KOH, amount of added ammonia water and NH₃ concentration of the reaction mixture of Example 2 and Comparative example 2

| Example | Molar ratio of KOH:Na₂(SO₄) | Amount of added KOH (g) | Amount of added ammonia water (ml) | NH₃ g/l |
|---------|------------------------------|--------------------------|-------------------------------------|---------|
| Ex 2.1 | 1:1 | 11.22 | 200 | 100 |
| Ex 2.2 | 2:1 | 22.44 | 200 | 100 |
| Ex 2.3 | 3:1 | 33.66 | 200 | 95 |
| Ex 2.4 | 4:1 | 44.88 | 200 | 96 |
| CEx 2.1 | 1:1 | 11.22 | 0 | - |
| CEx 2.2 | 2:1 | 22.44 | 0 | - |
| CEx 2.3 | 3:1 | 33.66 | 0 | - |

Table 5. The analysis results of the obtained solid and liquid fractions of Example 2 and Comparative example 2

| Example | Obtained solid (g) | Conversion of $SO_4$ (%) | XRD analysis | | ICP analysis (filtrate) | | | ICP analysis (solid) | | |
|---|---|---|---|---|---|---|---|---|---|---|
| | | | Main phase | Mass fraction [Y] of $NaK_3(SO_4)_2$: $K_2SO_4$ | K (g/l) | Na (g/l) | S (g/l) | K (wt.%) | Na (wt.% ) | S (wt.% ) |
| Ex 2.1 | 7.98 | 27.4 | $NaK_3(SO_4)_2$ | 100:0 | 9.49 | 20.25 | 11.64 | 34.12 | 7.674 | 19.38 |
| Ex 2.2 | 23.44 | 72.7 | $NaK_3(SO_4)_2$ | 100:0 | 12.20 | 16.90 | 4.37 | 35.35 | 7.977 | 19.32 |
| Ex 2.3 | 27.37 | 82.3 | $NaK_3(SO_4)_2$ | 100:0 | 24.01 | 16.49 | 2.85 | 35.77 | 7.641 | 19.40 |
| Ex 2.4 | 29.48 | 84.1 | $K_2SO_4$ | 43:57 | 35.38 | 19.60 | 2.55 | 40.62 | 3.742 | 17.46 |
| CEx 2.1 | 0 | - | - | - | 34.32 | 45.28 | 31.69 | - | - | - |
| CEx 2.2 | 10.66 | 37.1 | $NaK_3(SO_4)_2$ | 100:0 | 47.08 | 39.76 | 20.65 | 36.41 | 8.43 | 19.06 |
| CEx 2.3 | 22.10 | 66.4 | $NaK_3(SO_4)_2$ | 95:5 | 55.73 | 33.64 | 10.78 | 36.92 | 8.36 | 18.65 |

[Y] A mass fraction calculated based on the Rietveld refinement analysis.

In view of Example 2 and Comparative example 2, the more the added KOH, the lower the sulfur content remaining in the filtrate, which indicates a higher the conversion of sulfates, i.e. the conversion of the sulfate from the sulfate solution into the solid fraction, precipitated sulfate. Further, the examples show that addition of ammonia water facilitates the conversion of sulfate, as compared to those without addition of ammonia.

Example 3

Six different examples, Examples 3.1-3.6, were conducted wherein each Example 3.1-3.6, first, an amount of the alkaline waste sodium sulfate solution as described in the Table 6, which solution was obtained from a process for preparing metal hydroxides for batteries and which content is reported in Table 7 below, was mixed with an amount of potassium hydroxide (KOH) pellets as described in Table 6 while continuously stirring by a magnetic stirrer in an Erlenmeyer flask to form a fully homogenous solution. Then, the obtained solution was added to an Erlenmeyer flask containing 200 ml of 25 wt.% ammonia water (except in Example 4.6 the amount of the ammonia water was 2000 ml) while continuously stirring by a magnetic stirrer for 30 minutes. The mixing was then ended, and the solution was cooled down to 15 °C, followed by Büchner funnel filtering to separate the obtained solid and liquid fractions. A sample from the cooled the solution was taken for the $NH_3$ concentration analysis before filtering. The temperature of the mixture solution of the alkaline waste sodium sulfate solution and the potassium hydroxide was measured before and after the addition of it into the 25 wt.% ammonia water.

The analysis of the obtained solid and liquid fractions, including X-ray diffraction (XRD) for the solid and Inductively Coupled Plasma (ICP) of the elemental composition analysis for the solid and liquid, were conducted as described above and the results are given in Table 8. Table 8 reports also the amount (in grams) of the obtained solid fraction and the conversion percentage of $SO_4$ from the alkaline waste sodium sulfate solution to the obtained solid fraction, calculated by using the measured ICP results for the sulfur contents in the waste sodium sulfate solution and in the filtrate.

Comparative example 3

Comparative example 3 was conducted and analyzed in the same way as Example 3.5 except that instead of using 200 ml of 25 wt.% ammonia water, 200 ml of deionized water was used, the results are given in Table 8.

Table 6. The amount of added alkaline waste sodium sulfate solution, amount of added KOH, amount of added ammonia water, $NH_3$ concentration of the reaction mixture, and temperatures of the reaction mixture before and after the KOH addition of Example 3 and Comparative example 3

| Example | Amount of added waste sodium sulfate solution (ml) | Amount of added KOH (g) | Amount of added ammonia water (ml) | $NH_3$ in liquid phase after cooling (g/l) | Temperature before mixing with $NH_3$ (°C) | Temperature after mixing with $NH_3$ (°C) |
|---|---|---|---|---|---|---|
| Ex 3.1 | 25 | 1.88 | 200 | 158 | 20.0 | 19.4 |
| Ex 3.2 | 50 | 3.76 | 200 | 143 | 21.0 | 20.3 |
| Ex 3.3 | 100 | 7.53 | 200 | 135 | 24.1 | 22.2 |
| Ex 3.4 | 150 | 11.29 | 200 | 119 | 26.9 | 23.8 |
| Ex 3.5 | 200 | 15.05 | 200 | 92 | 26.0 | 23.0 |
| Ex 3.6 | 2000 | 150.00 | 2000 | 103 | 29.2 | 25.9 |
| CEx 3.1 | 200 | 15.06 | 0 | - | - | - |

Table 7. The content of the alkaline waste sodium sulfate solution used in Example 3 and Comparative Example 3

| Solution of example | Co (g/l) | Mn (g/l) | Ni (g/l) | K (g/l) | Na (g/l) | S (g/l) |
|---|---|---|---|---|---|---|
| Example 3 / Comparative example 3 | *0.0001* | *0.0000* | *0.0096* | 0.79 | 38.65 | 28.68 |

Table 8. The analysis results of the obtained solid and liquid fractions of Example 3 and Comparative example 3

| Example | Obtained solid (g) | Conversion of $SO_4$ (%) | XRD analysis | | ICP analysis (filtrate) | | | ICP analysis (solid) | | |
|---|---|---|---|---|---|---|---|---|---|---|
| | | | Main phase | Mass fraction of $NaK_3(SO_4)_2$:$K_2SO_4$ | K (g/l) | Na (g/l) | S (g/l) | K (wt.%) | Na (wt.%) | S (wt.%) |
| Ex 3.1 | 2.09 | 95.32 | $NaK_3(SO_4)_2$ | 100:0 | 1.43 | 3.789 | 1.343 | 32.7 | 7.649 | 18.81 |
| Ex 3.2 | 4.53 | 92.94 | $NaK_3(SO_4)_2$ | 100:0 | 2.24 | 6.593 | 2.025 | 33.45 | 8.258 | 19.32 |
| Ex 3.3 | 10.53 | 90.29 | $NaK_3(SO_4)_2$ | 100:0 | 3.03 | 10.31 | 2.785 | 31.41 | 8.006 | 18.44 |
| Ex 3.4 | 15.51 | 86.91 | $NaK_3(SO_4)_2$ | 100:0 | 4.04 | 12.83 | 3.754 | 32.36 | 8.193 | 18.95 |
| Ex 3.5 | 20.03 | 85.21 | $NaK_3(SO_4)_2$ | 100:0 | 4.87 | 13.88 | 4.242 | 22.85 | 5.648 | 13.39 |
| Ex 3.6 | 198.1 | 88.29 | $NaK_3(SO_4)_2$ | 100:0 | 5.586 | 13.76 | 3.357 | 34.71 | 8.217 | 19.48 |
| CEx 3.1 | 1.94 | 18.76 | $NaK_3(SO_4)_2$ | 100:0 | 36.54 | 37.79 | 23.3 | 27.19 | 5.639 | 15.62 |

In view of Example 3 and Comparative example 3, the removal of sulfate from the waste sodium sulfate solution was improved in every Examples 3.1-3.6 compared to the sulfate removal of the Comparative example 3.1. Further, the example shows that the more the $NH_3$ concentration in the reaction mixture the higher conversion of sulfates from the waste sodium sulfate solution into the solid fraction is, i.e. the lesser the sulfur content in the filtrate.

Example 4

Four different examples, Examples 4.1-4.4, were conducted wherein each Example 4.1-4.4, 5.0 g of the obtained solid fraction of Example 3.6 (i.e., a precipitate comprising $NaK_3(SO_4)_2$) and 15 ml of deionized water were mixed in an Erlenmeyer flask. Then the amount of potassium hydroxide (KOH) pellets as described in Table 9 was added into the flask in small batches and continuously stirring by a magnetic stirrer for 60 minutes at 35 °C to form a fully homogenous solution, followed by cooling to the room temperature (22 °C) and then Büchner funnel filtering to separate the obtained solid and liquid fractions.

The analysis of the obtained solid and liquid fractions, including X-ray diffraction (XRD) for the solid and Inductively Coupled Plasma (ICP) of the elemental composition analysis for the solid and liquid, were conducted as described above and the results are given in Table 10. Table 10 reports also the amount (in grams) of the obtained solid fraction and the conversion percentage of $SO_4$ from the alkaline waste sodium sulfate solution to the obtained solid fraction, calculated by using the measured ICP results.

Table 9. The molar ratio of KOH: $NaK_3(SO_4)_2$, amount of added solid fraction of Ex 3.6, amount of added KOH of Example 4

| Example | Molar ratio of KOH: $NaK_3(SO_4)_2$ | Amount of added $NaK_3(SO_4)_2$ (g) | Amount of added KOH (g) |
|---|---|---|---|
| Ex 4.1 | 1:1 | 5 | 0.88 |
| Ex 4.2 | 1.25:1 | 5 | 1.095 |
| Ex 4.3 | 1.5:1 | 5 | 1.32 |
| Ex 4.4 | 2:1 | 5 | 1.76 |

Table 10. The analysis results of the obtained solid fraction of Example 4

| Example | Obtai ned solid (g) | XRD analysis | | ICP analysis (solid) | | |
|---|---|---|---|---|---|---|
| | | Main phase | Mass fraction of $NaK_3(SO_4)_2$:$K_2SO_4$ | K (wt.%) | Na (wt.%) | S (wt.%) |
| Ex 4.1 | 2.7 | $NaK_3(SO_4)_2$ | 67:33 | 41.12 | 2.45 | 17.65 |
| Ex 4.2 | 2.88 | $K_2SO_4$ | 23:77 | 39.75 | 1.79 | 16.12 |
| Ex 4.3 | 3.11 | $K_2SO_4$ | 16:84 | 43.36 | 1.38 | 17.85 |
| Ex 4.4 | 3.44 | $K_2SO_4$ | 0:100 | 44.96 | 0.40 | 17.20 |

Example 4 shows that the glaserite can be further converted to potassium sulfate by adding potassium hydroxide.

**Claims**

1. A method for treating a first solution containing sodium sulfate obtainable from an industrial process, the method comprising:

   - providing the first solution, preferably the first solution is alkaline;
   - providing potassium hydroxide, preferably in solid form and/or as a second solution containing potassium hydroxide of 25 wt.% or more, such as in the range 25-75 wt.%;
   - mixing at least the potassium hydroxide with the first solution to obtain a reaction mixture, whereby obtaining a first solid fraction comprising precipitated sulfate and a first liquid fraction comprising sodium hydroxide; and
   - recovering the first solid fraction and the first liquid fraction,

   wherein the method further comprises providing a source of ammonia ($NH_3$) to obtain a concentration of $NH_{3(aq)}$ in the reaction mixture of at least 10 g/l.

2. The method according to claim 1, wherein the NH$_{3(aq)}$ concentration in the reaction mixture is at least 15 g/l, for example at least 16, 17, 18, 19, 20, 21, 22, 23, 24, or 25 g/l; preferably at least 35 g/l, for example at least 40, 45, 50, or 55 g/l; more preferably at least 60 g/l, for example at least 65, 70, 75, or 80 g/l; and even more preferably at least 90 g/l, for example at least 95, 100, 110, 120, 130, 140, or 150 g/l.

3. The method according to claim 1 or 2, wherein the first solution, the potassium hydroxide and the source of ammonia are provided and mixed in any order to obtain the reaction mixture, optionally the reaction mixture is obtained by:

   - mixing the first solution and the potassium hydroxide before admixing the source of ammonia;
   - mixing the first solution and the source of ammonia before admixing the potassium hydroxide;
   - mixing the potassium hydroxide and the source of ammonia before admixing the first solution; or
   - admixing the potassium hydroxide, the source of ammonia, and the first solution simultaneously.

4. The method according to any of the preceding claims, wherein the source of ammonia is ammonia water, preferably the ammonia water has a concentration of 170 g/l or more, such as in the range of 170-550 g/l, or a concentration of 300 g/l or more, such as in the range of 300-550 g/l, or a concentration of 400 g/l or more, such as in the range of 400-550 g/l.

5. The method according to any of the preceding claims, wherein a concentration of sulfur in the first solution is 10.00 g/l or more, such as in the range of 10.00-30.00 g/l, or 15.00 g/l or more, such as in the range of 15.00-50.00 g/l, as determined by ICP; and/or wherein a concentration of sodium in the first solution is 25.00 g/l or more, such as in the range of 20.00-80.00 g/l, or 30.00 g/l or more, such as in the range of 30.00-90.00 g/l, as determined by ICP.

6. The method according to any of the preceding claims, comprising providing the potassium hydroxide in excess molar amounts to the sodium sulfate of the first solution.

7. The method according to any of the preceding claims, comprising increasing alkalinity of the reaction mixture, such as by providing sodium hydroxide, preferably in excess molar amounts to the sodium sulfate.

8. The method according to any of the preceding claims, comprising adjusting the first solution to 30 °C before or during the providing the source of ammonia.

9. The method according to any of the preceding claims, comprising adjusting the reaction mixture to 50 °C or less, such as 2-50 °C or 2-30 °C.

10. The method according to any of the preceding claims, comprising treating the recovered first solid fraction by:

    - mixing the recovered first solid fraction with potassium hydroxide, preferably in solid form or as a solution containing potassium hydroxide of 25 wt.% or more, such as in the range 25-75 wt.%, to obtain a second reaction mixture wherein precipitation occurs, whereby a second solid fraction comprising potassium sulfate and a second liquid fraction comprising sodium hydroxide are obtained; and
    - recovering the second solid fraction and the second liquid fraction.

11. The method according to any of the preceding claims, wherein the recovering the first solid fraction comprises filtering the first solid fraction to obtain a composition containing potassium sulfate, optionally the filtering the first solid fraction comprising passing washing liquid comprising ammonia water through a filter cake comprising the first solid fraction obtained in the filtering of the solid fraction; wherein said composition is suitable to be used as fertilizer.

12. The method according to claim 10, wherein the recovering the second solid fraction comprises filtering the second solid fraction to obtain a composition containing potassium sulfate, optionally the filtering the second solid fraction comprising passing washing liquid comprising ammonia water through a filter cake comprising the second solid fraction obtained in the filtering of the second solid fraction; wherein said composition is suitable to be used as fertilizer.

13. The method according to any of the preceding claims, wherein the industrial process is a process of battery industry, preferably a hydroxide co-precipitation process of sulfate salt material comprising at least one of Ni, Mn, and Co.

14. The method according to claim 13, comprising using the first liquid fraction and/or second liquid fraction as a precipitant in the co-precipitation process.

15. The method according to any of preceding claims, wherein the method is a waste-free method comprising utilizing all the reaction products.

Europäisches
Patentamt
European
Patent Office
Office européen
des brevets

**EUROPEAN SEARCH REPORT**

Application Number

EP 24 16 1178

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/025448 A1 (CINIS FERTILIZER AB [SE]) 1 February 2024 (2024-02-01) * claims * | 1-15 | INV. C01D5/00 C01D5/08 C02F1/58 C05D1/02 H01M10/54 |
| Y | US 3 423 187 A (GOODENOUGH ROBERT D ET AL) 21 January 1969 (1969-01-21) * column 2, lines 22-32; claims; examples * | 1-15 | |
| A | RU 2 687 986 C1 (FEDERALNOE GOSUDARSTVENNOE BYUDZHETNOE OBRAZOVATELNOE UCHREZHDENIE VYS) 17 May 2019 (2019-05-17) * the whole document * | 1-15 | |

TECHNICAL FIELDS
SEARCHED      (IPC)

C01D
C05G
H01M
C02F
C05D

The present search report has been drawn up for all claims

| Place of search | Date of completion of the search | Examiner |
|---|---|---|
| Munich | 28 August 2024 | Marucci, Alessandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 1178

28-08-2024

| Patent document cited in search report | | Publication date | Patent family member(s) | | Publication date |
|---|---|---|---|---|---|
| WO 2024025448 | A1 | 01-02-2024 | SE     2250932 A1 | | 29-01-2024 |
| | | | WO  2024025448 A1 | | 01-02-2024 |
| US 3423187 | A | 21-01-1969 | NONE | | |
| RU 2687986 | C1 | 17-05-2019 | NONE | | |

For more details about this annex : see Official Journal of the European Patent Office, No. 12/82